# EUROPÄISCHE PATENTSCHRIFT

(11) **EP 3 281 239 B1**
(45) Veröffentlichungstag und Bekanntmachung des Hinweises auf die Patenterteilung: **26.06.2019**
(21) Anmeldenummer: 16716019.1
(22) Anmeldetag: 06.04.2016
(51) Int. Cl.: H01M 2/10, B60L 11/18

(54) **SCHNELL AUSTAUSCHBARE BATTERIEBAUGRUPPE UND MOTORFAHRZEUG, INSBESONDERE MOTORROLLER**
RAPIDLY EXCHANGEABLE BATTERY MODULE AND MOTOR VEHICLE, IN PARTICULAR A SCOOTER
MODULE DE BATTERIE RAPIDEMENT ÉCHANGEABLE ET VÉHICULE MOTORISÉ, EN PARTICULIER UN SCOOTER

(30) Priorität: 08.04.2015 DE 102015105330
(43) Veröffentlichungstag der Anmeldung: 14.02.2018
(73) Patentinhaber: Ujet S.A., 3364 Leudelange (LU)
(72) Erfinder: DAVID, Patrick, 89134 Blaustein (DE); GREHL, Mariana, 89195 Staig (DE); SPEIDEL, Timo, 89081 Ulm (DE)
(74) Vertreter: Würmser, Julian
(86) Internationale Anmeldenummer: PCT/EP2016/057500
(87) Internationale Veröffentlichungsnummer: WO 2016/162370

(56) Entgegenhaltungen:
- EP-A2- 2 280 436
- DE-A1-102007 054 258
- DE-A1-102011 111 537
- JP-A- H08 273 648
- JP-U- S 615 283

## Beschreibung

Die Erfindung betrifft eine Batteriebaugruppe, insbesondere für ein elektrisch angetriebenes Motorfahrzeug, insbesondere Motorrrad, vorzugsweise Motorroller, gemäß Patentanspruch 1. Des Weiteren betrifft die Erfindung ein elektrisch angetriebenes Motorfahrzeug, insbesondere Motorrrad, vorzugsweise Motorroller, umfassend mindestens eine Batteriebaugruppe, gemäß Patentanspruch 16.

Mit elektrischen Antrieben ausgestattete Motorräder bzw. Motorroller sind bekannt. Rein exemplarisch wird auf die EP 1 857 314 A2 verwiesen. Entsprechende elektrisch angetriebene Motorräder bzw. Motorroller haben üblicherweise eine Karosserie und mindestens zwei Räder, wobei eines der Räder über einen elektrischen Antrieb angetrieben wird, der über eine Batterie gespeist wird. Für das Laden einer Batterie wird wesentlich mehr Zeit benötigt als für das Volltanken von mit einer Brennkraftmaschine betriebenen Motorfahrzeugen. Insofern soll das Laden einer wiederaufladbaren Batterie möglichst dann erfolgen, wenn das elektrische Motorfahrzeug auf absehbare Zeit nicht benötigt wird. Das Motorfahrzeug/der Motorroller kann in dieser Ladezeit der Batterie nicht genutzt werden. Des Weiteren beschreiben DE 102011111537 und DE 102007054258 Batteriebaugruppen für Motorroller, bei denen die Batterie mittels teleskopartigem Bügelgriff entriegelbar ist. EP 2280436 beschreibt eine Batteriebaugruppe für einen Motorroller mit einer schnurartigen Entriegelungsvorrichtung, die sich außerhalb eines Batteriegehäuses befindet.

Ausgehend von diesem Stand der Technik ist es Aufgabe der vorliegenden Erfindung, eine Batteriebaugruppe zur Verfügung zu stellen, die möglichst einfach und ohne großen Kraftaufwand aus einem Motorfahrzeug, z.B. einem Motorroller. ausgebaut werden kann, so dass das Motorfahrzeug/der Motorroller mit einer vollgeladenen Batterie bzw. einer vollgeladenen Batteriebaugruppe bestückt werden kann. Des Weiteren ist es Aufgabe der vorliegenden Erfindung, ein weiterentwickeltes Motorfahrzeug, vorzugsweise einen weiterentwickelten Motorroller, anzugeben, der derart ausgebildet ist, dass dieser einfach mit auswechselbaren Batteriebaugruppen zu bestücken ist.

Erfindungsgemäß wird diese Aufgabe im Hinblick auf die Batteriebaugruppe durch den Gegenstand des Patentanspruches 1 und im Hinblick auf ein elektrisch antreibbares Motorfahrzeug, insbesondere ein Motorrad, vorzugsweise einen Motorroller, durch den Gegenstand des Patentanspruches 16 gelöst.

Vorteilhafte und zweckmäßige Ausgestaltungen der erfindungsgemäßen Batteriebaugruppe oder eines elektrisch antreibbaren Motorfahrzeugs, insbesondere eines Motorrads, vorzugsweise eines erfindungsgemäßen Motorrollers, sind in den Unteransprüchen angegeben.

Die genannte Aufgabe wird durch eine Batteriebaugruppe gelöst, die insbesondere für ein elektrisch antreibbares Motorfahrzeug, insbesondere für ein Motorrad, vorzugsweise für einen elektrischen Motorroller, ausgebildet ist. Die Batteriebaugruppe umfasst:
- mindestens eine, insbesondere wiederaufladbare, Batterie;
- mindestens eine lösbare mechanische Verriegelung zur Verbindung des Batteriegehäuses mit einer mit elektrischer Energie zu versorgenden Einheit, insbesondere zur Verbindung mit einem elektrischen Motorroller;
- mindestens einen im Batteriegehäuse ausgebildeten Stromkreis; und
- mindestens ein Betätigungselement, das aus dem Batteriegehäuse ausklappbar und/oder ausschwenkbar und/oder ausziehbar, insbesondere teleskopierbar, ausgebildet ist.

Erfindungsgemäß ist es somit möglich, dass eine Batteriebaugruppe mit einem ausziehbaren und/oder ausklappbaren und/oder ausschwenkbaren Betätigungselement betätigt, insbesondere gezogen bzw. geschoben, werden kann.

Das Betätigungselement kann als Hebel oder als Griff, insbesondere als Bügelgriff, ausgebildet sein. Der Griff weist vorzugsweise einen Greifabschnitt, der insbesondere mit der vollständigen Hand umgreifbar ist, auf. Vorzugsweise geht der Greifabschnitt in mindestens einen, vorzugsweise in zwei, Verlängerungsabschnitt(e) über. Bei dem mindestens einen Verlängerungsabschnitt kann es sich um ein stangenartiges bzw. schienenartiges Element handeln. Dieses stangenartige bzw. schienenartige Element ist insbesondere im bzw. am Batteriegehäuse ausklappbar und/oder ausschwenkbar und/oder ausziehbar, insbesondere teleskopierbar, gelagert.

In einem ersten Benutzungszustand, der dem Fahrzustand eines elektrisch antreibbaren Motorfahrzeugs, insbesonder eines elektrischen Motorrollers, entspricht, ist der Verlängerungsabschnitt vorzugsweise vollständig im Batteriegehäuse gelagert. In einem weiteren Benutzungszustand, der dem vom Motorfahrzeug, insbesondere vom Motorroller, losgelösten Zustand der Batteriebaugruppe entspricht, kann der mindestens eine Verlängerungsabschnitt aus dem Gehäuse ausgeklappt und/oder ausgeschwenkt und/oder ausgezogen werden, so dass das Betätigungselement in einem zumindest teilweise ausgeklappten und/oder ausgeschwenkten und/oder ausgezogenen, insbesondere teilweise teleskopierten, Zustand vorliegt. Dies ist mit dem ausgezogenen Griff eines Koffers bzw. Trolleys vergleichbar. Ein ausgeklapptes und/oder ausgeschwenktes und/oder ausziehbares, insbesondere teleskopierbares, Betätigungselement erleichtert somit die Handhabung einer von einem Motorroller gelösten Batteriebaugruppe. Die Batteriebaugruppe kann mit Hilfe des Betätigungselements beispielsweise zu einer Ladestation gezogen werden. In einem besonders bevorzugten Ausführungsbeispiel ist das Betätigungselement als Bügelgriff ausgebildet.

Das Batteriegehäuse kann einen Frontabschnitt, einen Rückabschnitt, zwei die Front- und Rückenabschnitte verbindende Seitenabschnitt, einen Deckelabschnitt und einen Bodenabschnitt umfassen, wobei das Batteriegehäuse vorzugsweise eine, insbesondere schlittenartige, Führungsvorrichtung aufweist, die auf eine, insbesondere schienenartige, Führungsvorrichtung der zu versorgenden Einheit, insbesondere eines Motorrads, besonders bevorzugt eines Motorrollers, geschoben oder schiebbar ist.

Besonders bevorzugt sind am Batteriegehäuse mindestens zwei Rollen angeordnet. Diese sind vorzugsweise am Frontabschnitt bzw. am Übergangsabschnitt vom Frontabschnitt zum Bodenabschnitt des Batteriegehäuses ausgebildet. Mit Hilfe von mindestens zwei Rollen kann die Batteriebaugruppe besonders gleichmäßig gezogen werden. Die Rollen können Teil der beschriebenen Führungsvorrichtung der Batteriegruppe sein und/oder diese Funktion übernehmen. Die Rollen können also das Anordnen der Batteriegruppe an der zu versorgenden Einheit erleichtern und beim Anordnen in der Führungsvorrichtung der zu versorgenden Einheit geführt sein.

Die Front-, Rück-, Seiten- und Deckelabschnitte können sowohl flach als auch gebogen ausgebildet sein. Insbesondere können zumindest einzelne Verbindungs- bzw. Übergangsbereiche zwischen den einzelnen Gehäuseabschnitten bzw. Abschnitten des Batteriegehäuses angeschrägt und/oder gewölbt ausgebildet sein.

Die, insbesondere schienenartig ausgebildete, Führungsvorrichtung der zu versorgenden Einheit, insbesondere des Motorrollers, bildet das Gegenstück zur, insbesondere schlittenartigen, Führungsvorrichtung des Batteriegehäuses. Die schlittenartige Führungsvorrichtung des Batteriegehäuses ist insbesondere im Bodenabschnitt des Batteriegehäuses ausgebildet.

Es ist möglich, dass das Batteriegehäuse der Batteriebaugruppe insbesondere in Fahrtrichtung bzw. entgegen der Fahrtrichtung auf der schienenartigen Führungsvorrichtung eines Motorrollers verschiebbar ist.

Die, insbesondere schlittenartig ausgebildete, Führungsvorrichtung des Batteriegehäuses geht vorzugsweise in eine Verriegelungsplatte bzw. in Verriegelungsplatten über. Die Verriegelungsplatte(n) wird (werden) vorzugsweise auf der, insbesondere schienenartig ausgebildeten, Führungsvorrichtung der zu versorgenden Einheit geführt bzw. geschoben bzw. gerollt.

Die zu versorgende Einheit, insbesondere der Motorroller, weist vorzugsweise eine Zentrierungshilfe auf. Die Zentrierungshilfe kann beispielsweise als dreiecksförmige und/oder U-förmige und/oder V-förmige Ausformung ausgebildet sein, so dass die Verriegelungsplatte bzw. die Verriegelungsplatten entlang dieser Ausformung geführt wird/werden, um anschließend in mindestens eine Verriegelungsausnehmung geführt zu werden. Die Rollen können den Anbringungsprozess erleichtern. Als Ausformung ist ein Element zu verstehen, das von einer Grundfläche absteht bzw. übersteht. Kanten der mindestens einen Verriegelungsplatte verlaufen beim Aufschieben der Batteriebaugruppe auf den Motorroller entlang der Kanten der Zentrierungshilfe.

In einer weiteren Ausführungsform der Erfindung weist das Batteriegehäuse im Bereich des Betätigungselements, insbesondere im Rückabschnitt, eine Eingriffsausnehmung auf, die derart ausgebildet ist, dass das Betätigungselement mit einer Hand umgreifbar ist. Im mit dem Motorroller verbundenen Zustand der Batteriebaugruppe erstreckt sich der Greifabschnitt des Betätigungselements vorzugsweise quer zur Fahrtrichtung. Das Batteriegehäuse weist eine derartige Ausnehmung bzw. Eingriffsausnehmung auf, dass das Betätigungselement im Klammergriff gezogen, insbesondere hochgezogen, werden kann.

Die Batteriebaugruppe kann zur Effizienzerhöhung der im Batteriegehäuse befindlichen Batterie eine Passivkühlung und/oder eine Aktivkühlung aufweisen. Bei der Passivkühlung kann es sich beispielsweise um eine Anordnung von Kühlrippen handeln. Beispielsweise ist die Kühlrippen-Anordnung auf dem Rückabschnitt und/oder auf einen/den Seitenabschnitt(en) des Batteriegehäuses ausgebildet.

Bei der Passivkühlung kann es sich außerdem um mindestens eine Lufteinlassöffnung handeln. Durch eine entsprechend ausgebildete Lufteinlassöffnung kann während der Fahrt mit einem Motorroller Umgebungsluft durch die mindestens eine Lufteinlassöffnung in das Batteriegehäuse geführt werden, wobei die erwärmte Luft durch mindestens eine entsprechende Luftauslassöffnung aus dem Batteriegehäuse strömen kann. Es ist möglich, dass als Aktivkühlung mindestens ein Lüftungsrad im Batteriegehäuse befindlich ist. Auch eine aktive Wasserkühlung kann innerhalb des Batteriegehäuses ausgebildet sein. Als Anordnung von Kühlrippen können sogenannte Kühlrippenbleche verwendet werden.

Die Batteriebaugruppe kann des Weiteren mindestens einen Stromstecker umfassen. Mit Hilfe eines Stromsteckers wird die Batteriebaugruppe elektrisch mit der elektrisch zu versorgenden Einheit, insbesondere mit dem elektrischen Motorroller, verbunden.

Vorzugsweise weist die Batteriebaugruppe einen kombinierten Strom-/ Kommunikationsstecker auf. Mit Hilfe eines derartigen Steckers kann die zu versorgende Einheit sowohl mit Strom versorgt werden bzw. von der Einheit Strom empfangen. Des Weiteren kann mit Hilfe eines derartigen kombinierten Strom-/Kommunikationssteckers eine Kommunikationsübertragung bzw. Kommunikationsverbindung zwischen der Batteriebaugruppe und der zu versorgenden Einheit hergestellt werden. Vorzugsweise weist der kombinierte Strom-/Kommunikationsstecker eine Bus-Schnittstelle auf.

Der kombinierte Strom-/Kommunikationsstecker ist beispielsweise an einem Seitenabschnitt des Batteriegehäuses ausgebildet. Die Pins des Strom-/ Kommunikationssteckers sind vorzugsweise senkrecht zu einer Bodenfläche ausgebildet. Die Verbindung des Strom-/Kommunikationssteckers mit einer Strom-/Kommunikationsbuchse einer elektrisch zu versorgenden Einheit, insbesondere eines elektrischen Motorrollers, kann demnach durch Aufschieben des Steckers auf die Buchse erfolgen.

Der kombinierte Strom-/Kommunikationsstecker kann beispielsweise durch Hochheben bzw. Hochziehen der schlittenartigen Führungsvorrichtung des Batteriegehäuses entlang der schienenartigen Führungsvorrichtung der zu versorgenden Einheit von einer kombinierten Strom-/Kommunikationsbuchse der zu versorgenden Einheit gelöst werden. Vorzugsweise liegt beim Abziehen des Strom-/Kommunikationssteckers von der Strom-/Kommunikationsbuchse kein Strom an. Vorzugweise wird vor dem Entfernen der Batteriebaugruppe von einem Motorroller der Stromkreis zwischen dem Motorroller und der Batteriebaugruppe unterbrochen. Vorzugsweise liegt bei dem Lösen des kombinierten Strom-/Kommunikationssteckers von der kombinierten Strom-/Kommunikationsbuchse kein Strom an der, durch den kombinierten Strom-/Kommunikationsstecker und kombinierten Strom-/Kommunikationsbuchse gebildeten, kombinierten Strom-/ Kommunikationsverbindung an.

Vorzugsweise ist eine mechanische Verriegelung der Batteriebaugruppe im Bodenabschnitt des Batteriegehäuses ausgebildet. Die mechanische Verriegelung kann beispielsweise als Verriegelungshaken ausgebildet sein. Die mechanische Verriegelung ist vorzugsweise durch ein Verriegelungs-Betätigungselement betätigbar. Erfindungsgemäß handelt es sich bei dem Verriegelungs-Betätigungselement um eine Schnur oder eine Kette oder ein Band oder eine Schlaufe. Durch Zug an der Schnur oder der Kette oder an dem Band oder an der Schlaufe kann die mechanische Verriegelung, insbesondere der Verriegelungshaken, betätigt werden.

Erfindungsgemäß ist das Verriegelungs-Betätigungselement, insbesondere die Schnur oder die Kette oder die Schlaufe oder das Band, im Batteriegehäuse bzw. innerhalb des Batteriegehäuses angeordnet. Im Batteriegehäuse ist vorzugsweise rückabschnittsseitig, ein Fach ausgebildet. Dieses Fach ist vorzugsweise verschließbar und/oder verriegelbar ausgebildet. Durch Abklappen bzw. Abheben eines entsprechend verschließbaren und/oder verriegelbaren Batteriegehäuseabschnitts kann Zugang zu dem Fach hergestellt werden. Vorzugsweise ist in dem Fach ein/das Verriegelungs-Betätigungselement, insbesondere eine/die Schnur oder eine/die Kette oder ein/das Band oder eine/die Schlaufe, angeordnet.

An dem Batteriegehäuse, insbesondere frontabschnittsseitig, kann mindestens eine Rolle angeordnet sein, so dass die Batteriebaugruppe im von der zu versorgenden Einheit getrennten Zustand mit Hilfe des Betätigungselements rollbar ist. Es ist möglich, dass die mindestens eine Rolle innerhalb des Batteriegehäuses versenkbar ausgebildet ist. Das Betätigungselement dient beim Rollen als Handgriff. Die Batteriebaugruppe ist vorzugsweise Trolley-artig ziehbar ausgebildet.

Die Batteriebaugruppe kann außerdem mindestens eine Netzbuchse zur Aufladung der mindestens einen Batterie aufweisen. Eine Netzbuchse dient zur Aufladung der mindestens einen Batterie bzw. zur Aufladung mindestens eines Batteriesatzes. In die mindestens eine Netzbuchse kann ein Stromstecker eingeführt werden, so dass der mindestens eine Batteriesatz aufgeladen werden kann.

Es ist möglich, dass in dem Batteriegehäuse mehrere Akkusätze bzw. Battery Packs angeordnet sind. Vorzugsweise sind mindestens zwei Netzbuchsen ausgebildet. Dies ermöglicht eine schnellere Ladung von mehreren Akkusätzen.

Des Weiteren kann die Batteriebaugruppe mindestens eine Bluetooth-Schnittstelle und/oder mindestens eine USB-Buchse umfassen. Es ist möglich, dass die mindestens eine Netzbuchse und/oder die mindestens eine Bluetooth-Schnittstelle und/oder die mindestens eine USB-Buchse innerhalb des vorzugsweise verschließbaren und/oder verriegelbaren Fachs ausgebildet ist/sind. Dies ermöglicht einen Manipulationsschutz, so dass lediglich der Besitzer eines Schlüssels bzw. Zugangssystems zum Fach auf eine USB-Buchse und/oder eine Netzbuchse zugreifen kann und die mindestens eine Bluetooth-Schnittstelle ein- bzw. ausschalten kann.

Mit Hilfe einer USB-Buchse können Programme geladen werden. Auch das Auslesen eines Fehlerspeichers ist mit Hilfe einer USB-Buchse möglich. Des Weiteren kann mit Hilfe einer Bluetooth-Schnittstelle und/oder mit Hilfe einer USB-Buchse ein innerhalb der Batteriebaugruppe, insbesondere innerhalb des Batteriegehäuses, angeordneter Lautsprecher angesteuert werden. Es ist möglich, dass über die Bluetooth-Schnittstelle und/oder über die USB-Buchse Audiodateien an die Batteriebaugruppe gesendet werden können.

Im Batteriegehäuse kann mindestens ein Lautsprecher eingebaut sein. Bei dem Lautsprecher handelt es sich vorzugsweise um einen Resonanzlautsprecher. Vorteilhafterweise kann ein Abschnitt des Batteriegehäuses als Resonanzfläche ausgebildet sein.

In einer weiteren Ausführungsform der Erfindung kann auf dem Batteriegehäuse, insbesondere deckelabschnittsseitig, ein Sattel ausgebildet sein. Ein Sattel eines Motorrollers ist folglich als Element der Batteriebaugruppe ausgebildet. Der Sattel ist vorzugsweise mit dem Batteriegehäuse, insbesondere dem Deckelabschnitt des Batteriegehäuses verbunden, insbesondere verklebt und/oder verrastet. Der Sattel kann aus einem Schaumstoffmaterial gebildet sein.

Vorzugsweise weist der Sattel eine ergonomisch vorteilhafte Form auf. Beispielsweise weist der Sattel ein V-förmiges und/oder U-förmiges Querschnittsprofil auf. Das Querschnittsprofil ist als in Fahrtrichtung verlaufender Längsschnitt sichtbar. Zumindest abschnittsweise kann der Sattel die Form eines hyperbolischen Paraboloids aufweisen.

Des Weiteren ist es möglich, dass die Batteriebaugruppe einen DC-DC-Konverter, also einen Gleichstrom-Gleichstromwandler und/oder ein Batterieladegerät und/oder eine Batterie-Kontrolleinheit umfasst. Außerdem kann die Batteriebaugruppe einen Notaus-Knopf aufweisen. Die Batteriebaugruppe kann beispielsweise eine 48 V/12 V-Spannungsversorgung zur Verfügung stellen. Es ist möglich, dass die 48 V-Spannungsversorgung direkt von dem mindestens einem Batteriesatz zur Verfügung gestellt wird. Die 12 V-Spannungsversorgung kann beispielsweise mit Hilfe des DC-DC-Konverters realisiert werden.

Die Ladung des Batteriesatzes kann über ein integriertes Batterieladegerät erfolgen, wobei das integrierte Batterieladegerät über die mindestens eine Netzbuchse mit Strom versorgt werden kann.

Aufgrund der mit Hilfe des kombinierten Strom-/Kommunikationssteckers herstellbaren Kommunikationsverbindung, ist es möglich, dass Daten hinsichtlich der Batterie, wie z.B. die Temperatur der Batterie und/oder der Ladezustand der Batterie, an eine Steuerung der zu versorgenden Einheit und/oder an eine Anzeigeeinheit der zu versorgenden Einheit übertragen werden können.

Ein nebengeordneter Aspekt der Erfindung betrifft ein elektrisch angetriebenes Motorfahrzeug, insbesondere ein elektrisch angetriebenes Motorrad, insbesondere einen elektrischen Motorroller, umfassend mindestens eine auswechselbare Batteriebaugruppe, insbesondere eine erfindungsgemäße Batteriebaugruppe. Die Batteriebaugruppe ist vorzugsweise an einem hinteren Rahmenteil des Motorrads, insbesondere des Motorrollers, lösbar befestigt bzw. lösbar verankert. Im eingebauten Zustand weist der Frontabschnitt des Batteriegehäuses in Fahrtrichtung bzw. in Richtung des Vorderrads des elektrischen Motorrads, insbesondere des elektrischen Motorrollers. Der Rückabschnitt des Batteriegehäuses weist vorzugsweise dementsprechend entgegen der Fahrtrichtung bzw. in Richtung des Hinterrads.

Das Motorrad, insbesondere der Motorroller, kann des Weiteren eine, insbesondere schienenartig ausgebildete, Führungsvorrichtung aufweisen, wobei das Batteriegehäuse nach dem Lösen einer/der mechanischen Verriegelung der Batteriebaugruppe mit Hilfe einer/der, vorzugsweise schlittenartigen, Führungsvorrichtung der Batteriebaugruppe von der Führungsvorrichtung des Motorrads, insbesondere des Motorrollers, entgegen der Fahrtrichtung schiebbar ist. Beim Lösen der mechanischen Verriegelung wird der Verriegelungshaken aus dem Verriegelungsgegenstück des elektrischen Motorrads, insbesondere des Motorrollers, gelöst. Anschließend kann die Batteriebaugruppe, insbesondere das Batteriegehäuse, vom Rahmen des elektrischen Motorrads, insbesondere Motorrollers, geschoben werden.

Das elektrische Motorrad, insbesondere der elektrische Motorroller, umfasst vorzugsweise ein mit der mechanischen Verriegelung zusammenwirkend ausgebildetes Verriegelungsgegenstück. Das Verriegelungsgegenstück ist vorzugsweise ein Verriegelungsbolzen bzw. eine Verriegelungsaufnahme für einen Verriegelungshaken.

Vorteilhafte und zweckmäßige Ausgestaltungen der erfindungsgemäßen Batteriebaugruppe oder des erfindungsgemäßen Motorrads, insbesondere des elektrischen Motorrollers, sind in den Unteransprüchen angegeben.

Alternativ und/oder zusätzlich wird die genannte Aufgabe durch eine Batteriebaugruppe gelöst, die insbesondere für ein elektrisch antreibbares Motorfahrzeug, insbesondere ein Motorrad, vorzugsweise einen Motorroller ausgebildet ist. Die Batteriebaugruppe umfasst:
- mindestens eine, insbesondere wiederaufladbare, Batterie,
- ein Batteriegehäuse, in dem zumindest die Batterie angeordnet ist,
- mindestens ein Betätigungselement, insbesondere mindestens einen Hebel oder einen Griff,
- mindestens eine lösbare mechanische Verriegelung zur Verbindung des Batteriegehäuses mit einer mit elektrischer Energie zu versorgenden Einheit, insbesondere zur Verbindung mit einem elektrischen Motorroller,
- mindestens einen im Batteriegehäuse ausgebildeten Stromkreis.

Durch Betätigen des Betätigungselements ist die mechanische Verriegelung lösbar und der Stromkreis unterbrechbar.

Mit anderen Worten kann durch lediglich einen Betätigungsvorgang sowohl die mechanische Verriegelung gelöst werden als auch der Stromkreis unterbrochen werden. Als Betätigen des Betätigungselements ist sowohl ein Drücken eines Betätigungselements als auch ein Ziehen eines Betätigungselements denkbar.

Erfindungsgemäß ist es demnach möglich, mit nur einem Handgriff sowohl das Batteriegehäuse hinsichtlich einer mechanischen Verriegelung von der zu versorgenden Einheit zu entriegeln als auch einen innerhalb des Batteriegehäuses vorhandenen Stromkreis zu unterbrechen.

Die mechanische Verriegelung umfasst mindestens einen Verriegelungsbolzen, der durch Betätigen, insbesondere Ziehen, des Betätigungselements aus einem Verriegelungsgegenstück, insbesondere einem Verriegelungsgegenstück mit einer Aussparung, der zu versorgenden Einheit lösbar ist. Durch ein Ziehen an dem Betätigungselement, das insbesondere als Hebel oder Griff ausgebildet ist, kann demnach ein Verriegelungsbolzen aus einer Aussparung eines Verriegelungsgegenstücks der zu versorgenden Einheit gezogen werden, so dass das Verriegelungsgegenstück frei ist.

Das Batteriegehäuse weist vorzugsweise eine Frontplatte, eine Rückplatte, zwei die Front- und Rückplatte verbindende Seitenplatten, eine Deckelplatte und einen Bodenabschnitt auf. Die Front-, Rück-, Seiten- und Deckelplatten können sowohl flach als auch gebogen ausgebildet sein. Insbesondere können zumindest einzelne Verbindungs- bzw. Übergangsbereiche zwischen den einzelnen Platten bzw. Abschnitten des Batteriegehäuses angeschrägt und/oder gewölbt ausgebildet sein.

Des Weiteren kann das Batteriegehäuse eine schlittenartige Führungsvorrichtung aufweisen, die auf eine schienenartige Führungsvorrichtung der zu versorgenden Einheit geschoben oder schiebbar ist. Die schienenartige Führungsvorrichtung der zu versorgenden Einheit, insbesondere des Motorrollers, bildet somit das Gegenstück zur schlittenartigen Führungsvorrichtung. Die schlittenartige Führungsvorrichtung des Batteriegehäuses ist insbesondere im Bodenabschnitt des Batteriegehäuses ausgebildet.

Es ist denkbar, dass das Batteriegehäuse der Batteriebaugruppe insbesondere in Fahrtrichtung bzw. entgegen der Fahrtrichtung auf der schienenartigen Führungsvorrichtung eines Motorrollers verschiebbar ist.

Das Betätigungselement, insbesondere der Griff oder der Hebel, kann des Weiteren mit einer Feder vorgespannt sein. Beim Betätigen des Betätigungselements ist eine Kraft entgegen der Federvorspannkraft aufzubringen. Sobald das Betätigungselement losgelassen wird, wird das Betätigungselement aufgrund der Federvorspannkraft in die ursprüngliche Position zurückgestellt. Ein Loslassen des Betätigungselements bewirkt demnach, dass sowohl die mechanische Verriegelung als auch der Stromkreis wieder geschlossen werden, sofern das Batteriegehäuse nicht vom Verriegelungsgegenstück der zu versorgenden Einheit wegbewegt wurde.

Sofern das Batteriegehäuse entlang der schienenartigen Führungsvorrichtung der zu versorgenden Einheit, insbesondere in Fahrtrichtung, verschoben wurde, kann die mechanische Verriegelung nicht mehr hergestellt werden. Allerdings wird der zunächst innerhalb des Batteriegehäuses unterbrochene Stromkreis wieder geschlossen.

In einer weiteren Ausführungsform der Erfindung weist das Batteriegehäuse im Bereich des Betätigungselements, insbesondere im Übergangsbereich von der Frontplatte zur Deckelplatte, eine Eingriffsausnehmung auf, die derart ausgebildet ist, dass das Betätigungselement mit einer Hand umgreifbar ist. Im mit dem Motorroller verbundenen Zustand der Batteriebaugruppe erstreckt sich das Betätigungselement vorzugsweise quer zur Fahrtrichtung. Das Batteriegehäuse weist eine derartige Ausnehmung bzw. Eingriffsausnehmung auf, dass das Betätigungselement im Klammergriff gezogen, insbesondere hochgezogen, werden kann.

Sowohl die schienenartige Führungsvorrichtung der zu versorgenden Einheit als auch die schlittenartige Führungsvorrichtung des Batteriegehäuses können gebogen ausgeführt sein. Vorzugsweise verläuft der Bogen in Fahrtrichtung nach vorne oben. Ein derartiger Bogen bewirkt, dass das Batteriegehäuse komfortabel nach Betätigen des Betätigungselements und entsprechendem Ziehen am Betätigungselement nach oben gezogen werden kann.

Die Batteriebaugruppe kann zur Effizienzerhöhung der im Batteriegehäuse befindlichen Batterie eine Passivkühlung und/oder eine Aktivkühlung aufweisen. Bei der Passivkühlung kann es sich beispielsweise um eine Anordnung von Kühlrippen handeln. Vorzugsweise ist die Kühlrippen-Anordnung auf der Rückplatte und/oder auf der Frontplatte des Batteriegehäuses ausgebildet. Als Aktivkühlung ist es denkbar, dass mindestens ein Lüftungsrad im Batteriegehäuse befindlich ist. Auch eine aktive Wasserkühlung kann innerhalb des Batteriegehäuses ausgebildet sein. Als Anordnung von Kühlrippen können sogenannten Kühlrippenbleche verwendet werden.

Die Batteriebaugruppe umfasst des Weiteren mindestens einen Stromstecker. Mit Hilfe dieses Stromsteckers wird die Batteriebaugruppe elektrisch mit der elektrisch zu versorgenden Einheit, insbesondere mit dem elektrischen Motorroller, verbunden.

Vorzugsweise weist die Batteriebaugruppe einen kombinierten Strom-/Kommunikationsstecker auf. Mit Hilfe eines derartigen Steckers kann die zu versorgende Einheit sowohl mit Strom versorgt werden bzw. von der Einheit Strom empfangen. Des Weiteren kann mit Hilfe eines derartigen kombinierten Strom-/Kommunikationssteckers eine Kommunikationsübertragung bzw. Kommunikationsverbindung zwischen der Batteriebaugruppe und der zu versorgenden Einheit hergestellt werden. Vorzugsweise weist der kombinierte Strom-/Kommunikationsstecker eine BUS-Schnittstelle auf.

Der kombinierte Strom-/Kommunikationsstecker ist vorzugsweise im Bodenabschnitt des Batteriegehäuses, insbesondere am frontplattenseitigen Ende der schlittenartigen Führungsvorrichtung des Batteriegehäuses, ausgebildet.

Der kombinierte Strom-/Kommunikationsstecker kann durch Ziehen der schlittenartigen Führungsvorrichtung des Batteriegehäuses entlang der schienenartigen Führungsvorrichtung der zu versorgenden Einheit von einer kombinierten Strom-/Kommunikationsbuchse der zu versorgenden Einheit gelöst werden bzw. ist lösbar. Da beim Herausschieben der Batteriebaugruppe bzw. des Batteriegehäuses von der schienenartigen Führungsvorrichtung der zu versorgenden Einheit in einem ersten initiierenden Schritt aufgrund Betätigung des Betätigungselements der innerhalb des Batteriegehäuses verschaltete Stromkreis unterbrochen wird, liegt bei dem Lösen des kombinierten Strom-/Kommunikationssteckers von der kombinierten Strom-/Kommunikationsbuchse kein Strom an der, durch den kombinierten Strom-/Kommunikationsstecker und kombinierten Strom-/Kommunikationsbuchse gebildeten, kombinierten Strom-/Kommunikationsverbindung an.

An dem Batteriegehäuse, insbesondere am rückplattenseitigen Ende des Bodenabschnitts, kann eine Rolle angeordnet sein, so dass die Batteriebaugruppe im von der zu versorgenden Einheit getrennten Zustand mit Hilfe des Betätigungselements rollbar ist. Vorzugsweise ist die angeordnete Rolle innerhalb des Batteriegehäuses versenkbar ausgebildet. Das Betätigungselement dient beim Rollen als Handgriff. Es kann vorgesehen sein, dass die Verriegelung der Batteriebaugruppe, insbesondere der Verriegelungsbolzen derart aus dem Batteriegehäuse ausziehbar bzw. teleskopierbar ausgebildet ist, dass die Batteriebaugruppe trolleyartig ziehbar ist.

Die Batteriebaugruppe umfasst des Weiteren eine Netzbuchse zur Aufladung der mindestens einen Batterie bzw. zur Aufladung mindestens eines Batteriesatzes, wobei die Netzbuchse vorzugsweise rückplattenseitig ausgebildet ist. In die Netzbuchse kann ein Stromstecker eingeführt werden, so dass der mindestens eine Batteriesatz aufgeladen werden kann. Es ist denkbar, dass in dem Batteriegehäuse mehrere Akkusätze bzw. Batterypacks angeordnet sind.

Des Weiteren ist es denkbar, dass die Batteriebaugruppe einen DC-DC-Konverter, also einen Gleichstrom-/Gleichstromwandler und/oder ein Batterieladegerät und/oder eine Batterie-Kontrolleinheit umfasst. Außerdem kann die Batteriebaugruppe einen Notaus-Knopf aufweisen. Die Batteriebaugruppe kann beispielsweise eine 48V/12V-Spannungsversorgung zur Verfügung stellen. Es ist möglich, dass die 48 V-Spannungsversorgung direkt von dem mindestens einem Batteriesatz zur Verfügung gestellt wird. Die 12 V-Spannungsversorgung kann beispielsweise mit Hilfe des DC-DC-Konverters realisiert werden.

Die Ladung des Batteriesatzes kann über ein integriertes Batterieladegerät erfolgen, wobei das integrierte Batterieladegerät über die Netzbuchse mit Strom versorgt werden kann.

Aufgrund der mit Hilfe des kombinierten Strom-/Kommunikationssteckers herstellbaren Kommunikationsverbindung, ist es möglich, dass Daten hinsichtlich der Batterie, wie z.B. die Temperatur der Batterie und/oder der Ladezustand der Batterie, an eine Steuerung der zu versorgenden Einheit und/oder an eine Anzeigeeinheit der zu versorgenden Einheit übertragen werden.

Ein weiterer Aspekt der Erfindung betrifft ein Motorfahrzeug, insbesondere ein Motorrad, vorzugsweise einen Motorroller, insbesondere einen elektrischen Motorroller, der mindestens eine auswechselbare Batteriebaugruppe, insbesondere eine erfindungsgemäße Batteriebaugruppe, umfasst.

Die Batteriebaugruppe ist vorzugsweise innerhalb eines zwischen einem Sattel und einem hinteren Rahmenteil des Motorfahrzeugs, insbesondere eines Motorrads oder eines Motorrollers angeordneten Halterahmen lösbar verankert. Im eingebauten Zustand weist eine/die Frontplatte des Batteriegehäuses in Fahrtrichtung bzw. in Richtung des Vorderrads des des Motorfahrzeugs, insbesondere eines Motorrads oder eines Motorrollers. Eine/die Rückplatte des Batteriegehäuses weist dementsprechend entgegen der Fahrtrichtung bzw. in Richtung des Hinterrads.

Das Motorfahrzeug, insbesondere das Motorrad oder der Motorroller kann des Weiteren eine schienenartige Führungsvorrichtung aufweisen, wobei ein/das Batteriegehäuse nach dem Lösen einer/der mechanischen Verriegelung mit Hilfe einer/der schlittenartigen Führungsvorrichtung von der schienenartigen Führungsvorrichtung in Fahrtrichtung ziehbar bzw. verschiebbar ist.

Vorzugsweise umfasst der Motorroller ein mit einer/der mechanische Verriegelung der Batteriebaugruppe zusammenwirkendes Verriegelungsgegenstück mit einer Aussparung. Die mechanische Verriegelung der Batteriebaugruppe umfasst einen Verriegelungsbolzen. Der Motorroller weist ein Verriegelungsgegenstück, insbesondere ein Verriegelungsgegenstück mit einer Aussparung, auf. Bei Lösen der mechanischen Verriegelung wird der Verriegelungsbolzen aus der Aussparung des Verriegelungsgegenstücks gezogen bzw. geschoben, so dass das Batteriegehäuse anschließend entlang der schienenartigen Führungsvorrichtung in Fahrtrichtung verschiebbar ist.

Bei einem ausgebildeten Elektromotor-Antrieb handelt es sich um einen CO₂-neutralen Antrieb. Aufgrund des lösbaren Verankerns der Batterie bzw. der Batteriebaugruppe kann eine leere Batterie bzw. eine leere Batteriebaugruppe mit einer geladenen Batterie bzw. einer geladenen Batteriebaugruppe einfach ausgetauscht werden. Das Aufladen einer derartigen Stromquelle bzw. einer derartigen Batterie bzw. eines derartigen Akkumulators ist folglich auch innerhalb eines Hauses möglich. Es ist nicht notwendig, dass das zusammenfaltbare Zweirad an einer öffentlichen Ladestation bzw. an einer Stromtankstelle geladen wird.

Nachfolgend wird die Erfindung anhand von Ausführungsbeispielen für einen elektrisch antreibbaren Motorroller beschrieben, welche anhand von Abbildungen näher erläutert werden.

Hierbei zeigen:
- Fig. 1:: einen elektrisch angetriebenen Motorroller in perspektivischer Ansicht;

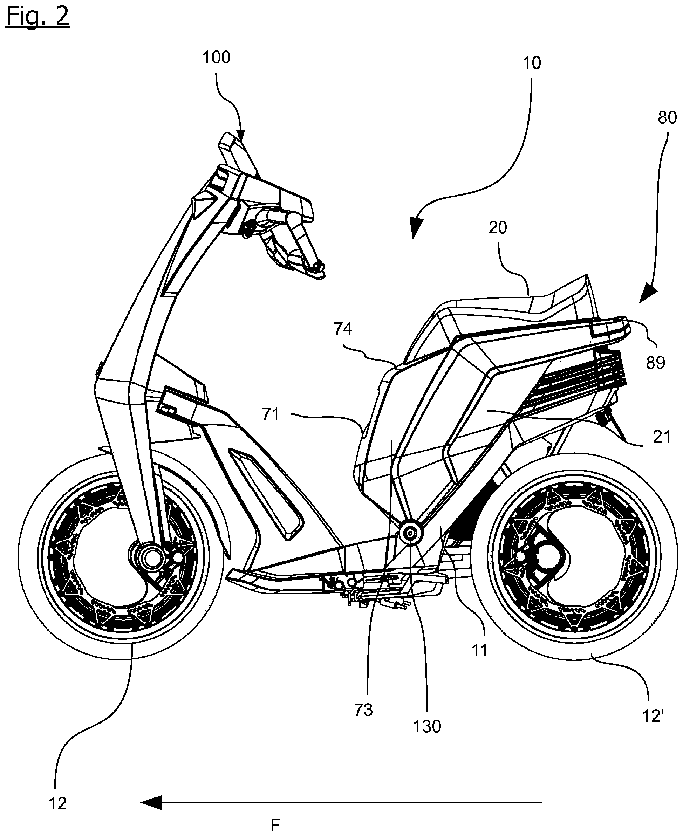

- Fig. 2:: den elektrisch betriebenen Motorroller der Fig. 1 in einer seitlichen Ansicht;

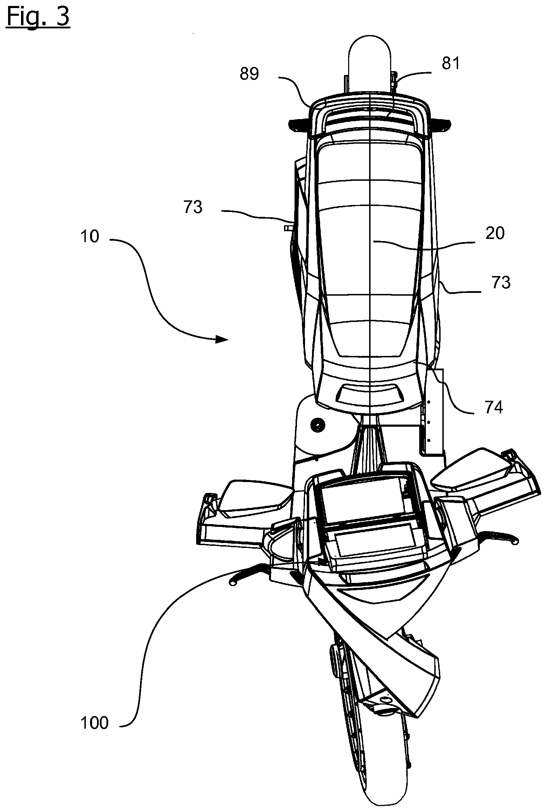

- Fig. 3:: den elektrisch betriebenen Motorroller der Fig. 1 und 2 in einer Draufsicht;
- Fig. 4a-4c:: verschiedene perspektivische Ansichten hinsichtlich einer erfindungsgemäßen Batteriebaugruppe, gemäß einer ersten Ausführungungsform;
- Fig. 5:: eine transparente Ansicht hinsichtlich der im Batteriegehäuse der Batteriebaugruppe befindlichen Komponenten;
- Fig. 6:: hinterer Rahmenteil ohne befestigte Batteriebaugruppe;
- Fig. 7:: einen Motorroller mit einer eingebauten Batteriebaugruppe gemäß einem zweiten Ausführungsbeispiel;
- Fig. 8a-8c:: verschiedene perspektivische Ansichten hinsichtlich einer erfindungsgemäßen Batteriebaugruppe gemäß einer zweiten Ausführungsform; und
- Fig. 9:: eine transparente Ansicht hinsichtlich der im Batteriegehäuse der Batteriebaugruppe befindlichen Komponenten.

In der nachfolgenden Beschreibung werden für gleiche und gleichwirkende Teile dieselben Bezugsziffern verwendet.

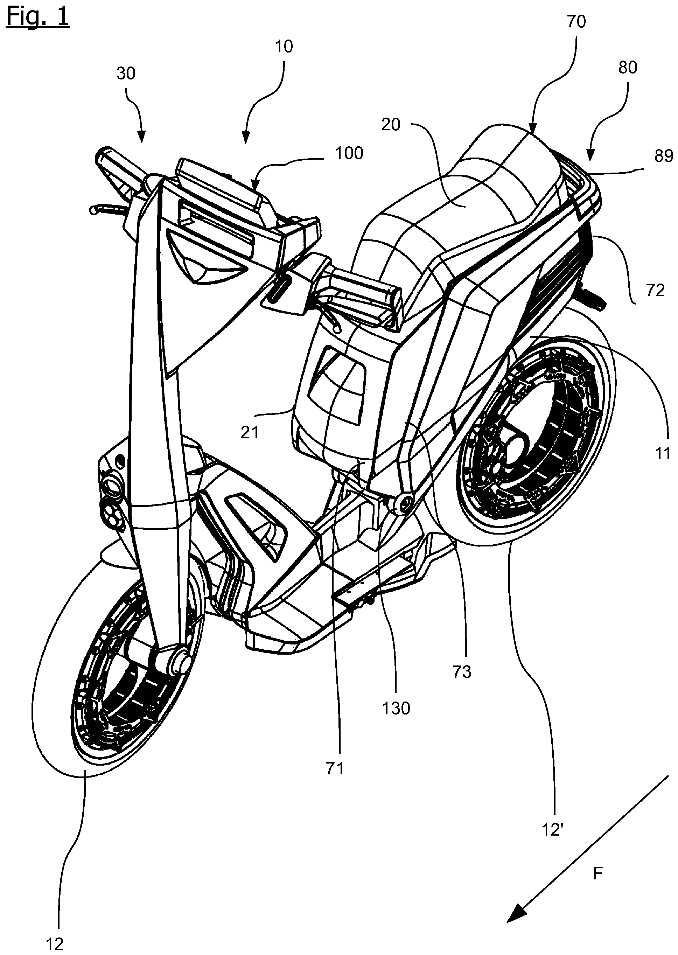

Fig. 1 zeigt eine Gesamtansicht eines erfindungsgemäßen Rollers bzw. elektrischen Motorrollers 10. Der Motorroller 10 hat eine Karosserie, an der ein Vorderrad 12 und ein Hinterrad 12' drehbeweglich befestigt sind. Des Weiteren umfasst die Karosserie eine Lenkeinrichtung 30, die ein Steuern des Motorrollers 10 ermöglicht. Am unteren Ende der Lenkeinrichtung 30 befindet sich das Vorderrad 12. Im rückwärtigen Teil, insbesondere am hinteren Rahmenteil 11 befindet sich eine Batteriebaugruppe 70 sowie ein zur Batteriebaugruppe 70 zugehöriges Batteriegehäuse 21. Ebenfalls zu erkennen ist ein Sattel 20.

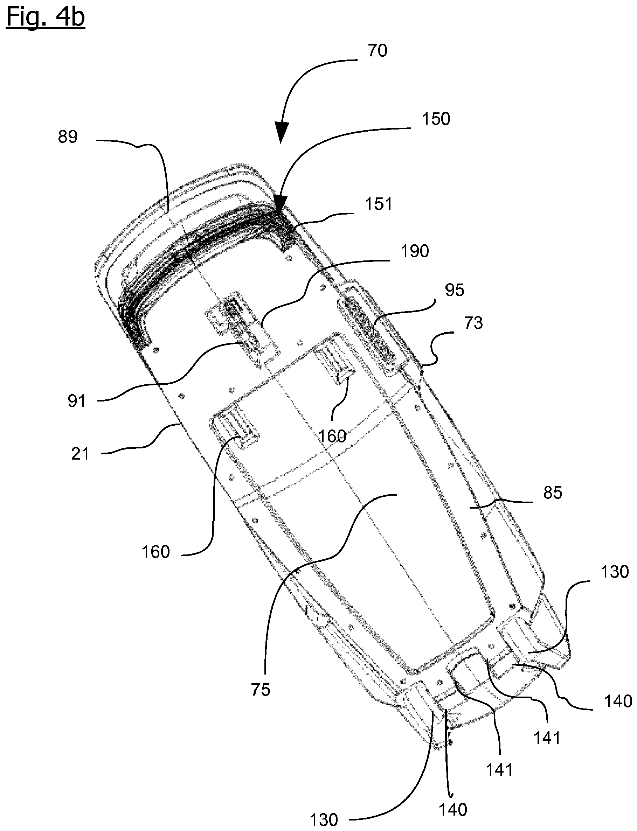

Die Batteriebaugruppe 70 umfasst ein Batteriegehäuse 21 mit einem Frontabschnitt 71, einem Rückabschnitt 72, zwei die Front- und Rückabschnitte 71 und 72 verbindende Seitenabschnitt 73 und einen Bodenabschnitt 75 (siehe hierzu Fig. 4b). Ebenfalls zu erkennen ist ein Betätigungselement 80, das in Form eines Bügelgriffes ausgebildet ist.
Der Greifabschnitt 89 ist im in den Motorroller 10 eingebauten Zustand quer zur Fahrtrichtung F angeordnet.

Um ein Umgreifen des Betätigungselements 80, insbesondere des Greifabschnitts 89, zu ermöglichen, weist das Batteriegehäuse 21 im Bereich des Rückabschnitts 72 eine Eingriffsausnehmung 81 auf. Diese Eingriffsausnehmung 81 ist derart ausgebildet, dass das Betätigungselement 80, insbesondere der Greifabschnitt 89, mit der Hand vollständig umgreifbar ist.

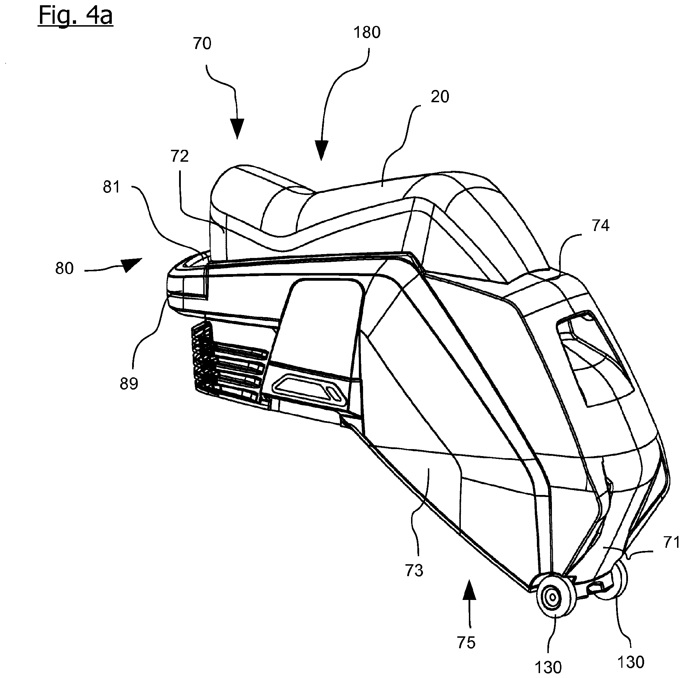

In den Figuren 4a bis 4c ist die Batteriebaugruppe 70 dargestellt. Das Batteriegehäuse 21 umfasst einen Frontabschnitt 71, einen Rückabschnitt 72, zwei die Front- und Rückabschnitte 71 und 72 verbindende Seitenabschnitte 73, einen Deckelabschnitt 74 und einen Bodenabschnitt 75 (siehe Fig. 4b). Ebenfalls zu erkennen ist ein Betätigungselement 80, das in Form eines Bügelgriffes ausgebildet ist. Der Greifabschnitt 89 ist im in den Motorroller 10 eingebauten Zustand quer zur Fahrtrichtung F angeordnet.

Um ein Umgreifen des Greifabschnitts 89 zu ermöglichen, weist das Batteriegehäuse 21 im Bereich des Betätigungselements 80, nämlich im Rückabschnitt 72 eine Eingriffsausnehmung 81 auf. Diese Eingriffsausnehmung 81 ist derart ausgebildet, dass der Greifabschnitt 89 mit der Hand vollständig umgreifbar ist.

Die Batteriebaugruppe 70 weist zwei Rollen 130 auf. Diese Rollen 130 sind vorzugsweise am Frontabschnitt 71 bzw. am Übergangsabschnitt vom Frontabschnitt 71 zum Bodenabschnitt 75 und zu den Seitenabschnitten 73 des Batteriegehäuses 21 ausgebildet. Mit Hilfe von mindestens zwei Rollen 130 kann die Batteriebaugruppe 70 besonders gleichmäßig gezogen werden.

Der Sattel 20 ist als Element der Batteriebaugruppe 70 ausgebildet. Der Sattel 20 ist vorzugsweise mit dem Batteriegehäuse 21, insbesondere dem Deckelabschnitt 74 des Batteriegehäuses 21, verbunden, insbesondere verklebt und/oder verrastet. Der Sattel 20 ist vorzugsweise aus einem Schaumstoffmaterial gebildet.

Der dargestellte Sattel 20 weist eine ergonomisch vorteilhafte Form auf. Zumindest abschnittsweise ist ein V-förmiges Querschnittsprofil 180 zu erkennen. Das Querschnittsprofil 180 ist vorzugsweise als in Fahrtrichtung F verlaufender Längsschnitt sichtbar. Zumindest abschnittsweise kann der Sattel 20 die Form eines hyperbolischen Paraboloids aufweisen. Quer zur Fahrtrichtung F bzw. parallel zum Greifabschnitt 89 ist ebenfalls eins Querschnittsprofil ausgebildet, wobei dieses Querschnittsprofil zumindest abschnittsweise U-förmig ausgebildet ist.

In Fig. 4b ist der Bodenabschnitt 75 dargestellt. Im Bodenabschnitt 75 ist eine Vertiefung 190 ausbildet, wobei in dieser Vertiefung 190 bzw. Ausnehmung ein Element einer mechanischen Verriegelung 91 ausgebildet ist. Bei der mechanischen Verriegelung 91 handelt es sich um einen Verriegelungshaken. Mit Hilfe des Verriegelungshakens 91, kann die Batteriebaugruppe 70, insbesondere das Batteriegehäuse 21, mit einem Motorroller 10 verbunden werden.

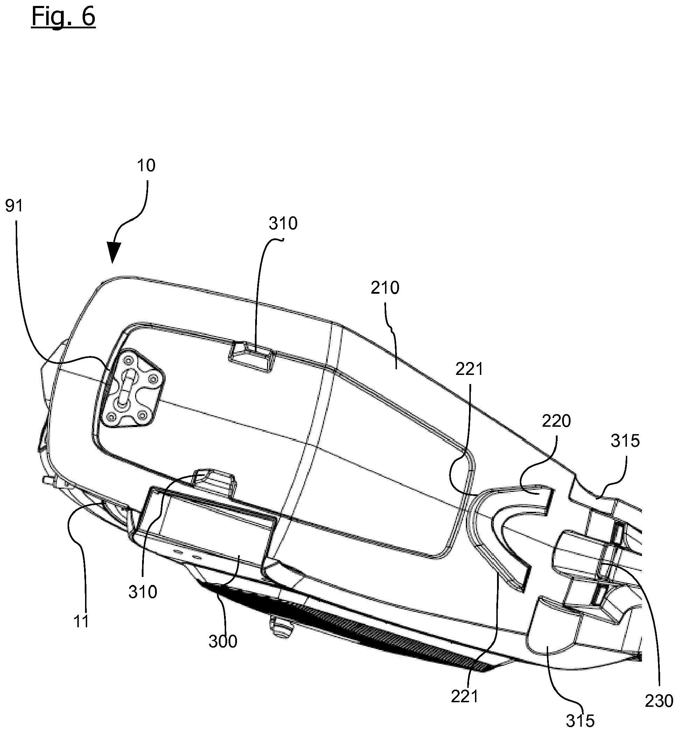

Im Bodenabschnitt 75 des Batteriegehäuses 21 ist eine, insbesondere schlittenartige, Führungsvorrichtung 85 ausgebildet, die auf eine, insbesondere schienenartige, Führungsvorrichtung 210 des Motorrollers 10, geschoben oder schiebbar ist (siehe Fig. 6).

Die Führungsvorrichtung 85 des Batteriegehäuses 21 geht vorzugsweise in Verriegelungsplatten 140 über. Die Verriegelungsplatten 140 werden auf der Führungsvorrichtung 210 der zu versorgenden Einheit 10 geführt bzw. geschoben.

Der Motorroller 10 (siehe Fig. 6) weist vorzugsweise eine Zentrierungshilfe 220 auf. Die Zentrierungshilfe 220 kann beispielsweise als V-förmige Ausformung ausgebildet sein, so dass die Verriegelungsplatten 140 entlang dieser Ausformung 220 geführt werden, um anschließend in Verriegelungsausnehmungen 230 geführt zu werden. Die V-Form der Zentrierungshilfe 220 ist derart auf dem Motorroller 10 ausgebildet, dass der Scheitel des Vs entgegen der Fahrtrichtung F, bzw. in Richtung des hinteren Endes des hinteren Rahmenteils 11 weist. Kanten 141 der Verriegelungsplatten 140 verlaufen beim Aufschieben der Batteriebaugruppe 70 auf den Motorroller 10 entlang der Kanten 221 der Zentrierungshilfe 220.

In Fig. 4b ist außerdem ein kombinierter Strom-/Kommunikationsstecker 95 zu erkennen. Mit Hilfe eines derartigen Steckers 95 kann der Motorroller 10 mit Strom versorgt werden. Des Weiteren kann mit Hilfe eines derartigen kombinierten Strom-/Kommunikationssteckers 95 eine Kommunikationsübertragung bzw. Kommunikationsverbindung zwischen der Batteriebaugruppe 70 und dem Motorroller 10 hergestellt werden. Vorzugsweise weist der kombinierte Strom-/Kommunikationsstecker 95 eine Bus-Schnittstelle auf.

Der kombinierte Strom-/Kommunikationsstecker 95 ist im Bereich des Bodenabschnitts 75 an einem Seitenabschnitt 73 des Batteriegehäuses 21 ausgebildet. Die Pins des Strom-/ Kommunikationssteckers sind vorzugsweise senkrecht zum Bodenabschnitt 75 ausgebildet. Die Verbindung des Strom-/Kommunikationssteckers 95 mit einer Strom-/Kommunikationsbuchse 300 des Motorrollers 10 (siehe Fig. 6), kann demnach durch Aufschieben des Steckers 95 auf die Buchse 300 erfolgen.

Im Zusammenhang mit den Fig. 4b und 6 wird auch klar, dass im Batteriegehäuse 21, insbesondere im Bodenabschnitt 75, mehrere Verriegelungsausnehmungen 160 ausgebildet sein können. Diese Verriegelungsausnehmungen 160 dienen zum Einrasten/Aufnehmen von Verriegelungsausformungen 310 (siehe Fig. 6) des Rahmenteils 11 des Motorrollers 10. Am Motorroller 10 können außerdem Ausnehmungen 315 ausgebildet sein, in die die Rollen 130 der Batteriebaugruppe 70 gleiten können.

Im Batteriegehäuse 21 ist rückabschnittsseitig ein Fach 150 ausgebildet. Dieses Fach 150 ist verschließbar und/oder verriegelbar ausgebildet. Durch Abklappen bzw. Abheben eines entsprechend verschließbaren und/oder verriegelbaren Batteriegehäuseabschnitts bzw. Deckels 151 kann Zugang zu dem Fach 150 hergestellt werden. Vorzugsweise ist in dem Fach 150 ein/das Verriegelungs-Betätigungselement, insbesondere eine/die Schnur oder eine/die Kette und/oder ein/das Band und/oder eine/die Schlaufe (nicht dargestellt), angeordnet. Mit Hilfe einer Schnur oder einer Kette oder mit Hilfe eines Bandes oder einer Schlaufe kann die mechanische Verriegelung 91, insbesondere ein Verriegelungshaken, betätigt werden.

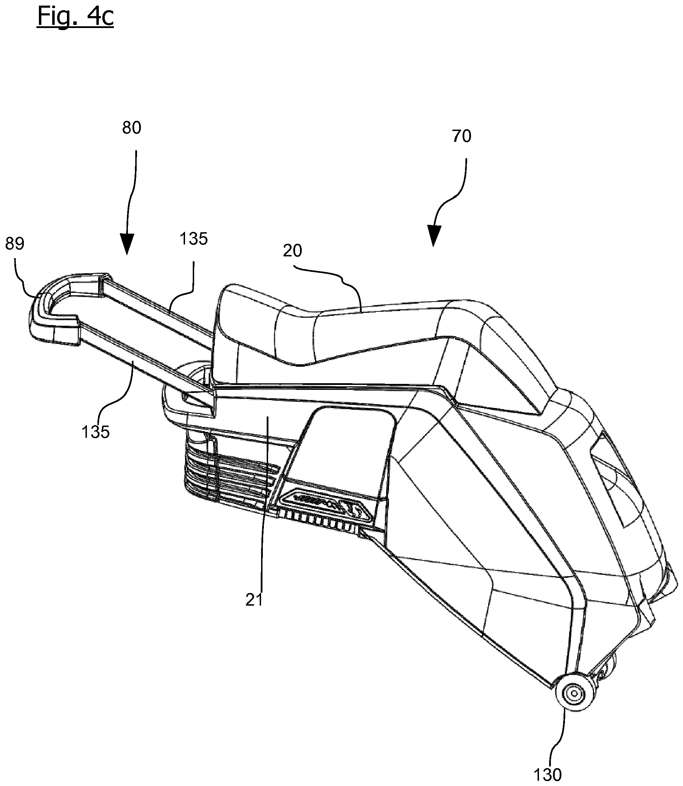

In Fig. 4c ist zu erkennen, dass der Griff 80 als Bügelgriff ausgebildet ist. Der Griff 80 weist einen Greifabschnitt 89 auf, wobei der Greifabschnitt 89 in zwei stangenartige bzw. schienenartige Verlängerungsabschnitte 135 übergeht. Diese Verlängerungsabschnitte 135 sind im dargestellten Zustand aus dem Batteriegehäuse 21 ausgezogen.

In dem dargestellten Benutzungszustand, der dem vom Motorroller 10 losgelösten Zustand der Batteriebaugruppe 70 entspricht, sind die Verlängerungsabschnitte 135 derart aus dem Gehäuse 21 ausgezogen, dass das Betätigungselement 80 in einem zumindest teilweise ausgezogenen, insbesondere teilweise teleskopierten, Zustand vorliegt. Die Batteriebaugruppe 70 kann mit Hilfe der Rollen 130 einfach transportiert werden.

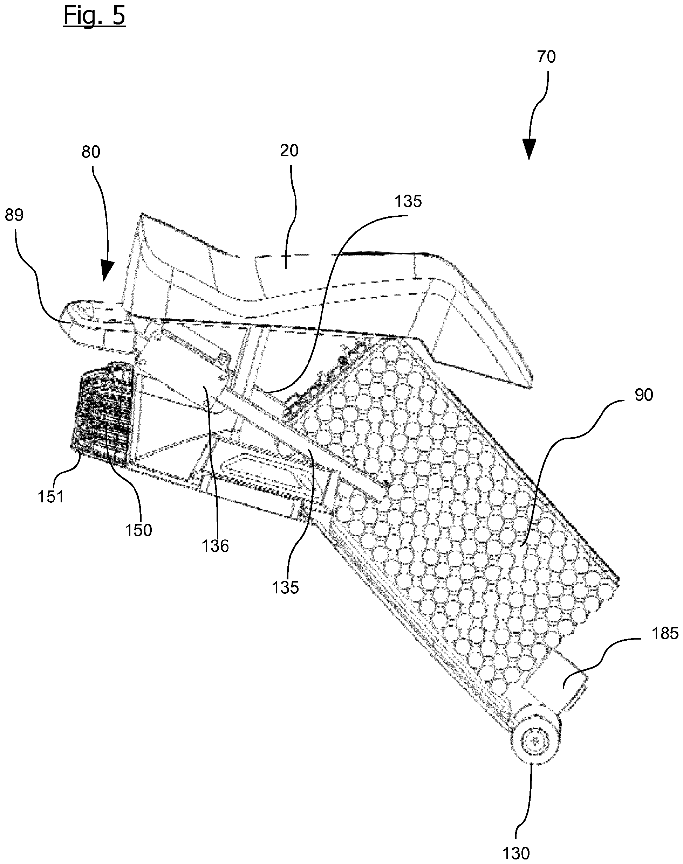

In der Fig. 5 werden in einer teiltransparenten Ansicht (die Batteriegehäuseabschnitte sind hier nicht dargestellt) die im Batteriegehäuse 21 befindlichen Komponenten dargestellt.

Zu erkennen ist, dass der Griff 80 als Bügelgriff ausgebildet ist. Der Griff 80 weist einen Greifabschnitt 89 auf, wobei der Greifabschnitt 89 in zwei stangenartige bzw. schienenartige Verlängerungsabschnitte 135 übergeht. Diese Verlängerungsabschnitte 135 sind im Batteriegehäuse 21 ausziehbar, insbesondere teleskopierbar, gelagert.

In einem ersten Benutzungszustand, der dem Fahrzustand eines elektrischen Motorrollers 10 entspricht, sind die Verlängerungsabschnitte 135 vorzugsweise vollständig im Batteriegehäuse 21 gelagert.

Die Verlängerungsabschnitte 135 können in Führungsschienen 136 gelagert sein.

Im Batteriegehäuse 21 ist ein Lautsprecher 185 eingebaut. Bei dem Lautsprecher 185 handelt es sich vorzugsweise um einen Resonanzlautsprecher.

Vorteilhafterweise kann ein Abschnitt, insbesondere der Frontabschnitt 71, des Batteriegehäuses 21 als Resonanzfläche ausgebildet sein. Der Lautsprecher 185 ist zwischen der Batterie 90 und einem Abschnitt, insbesondere dem Frontabschnitt 71, des Batteriegehäuses 21 eingebaut.

In Fig. 6 wird ein hinterer Rahmenteil 11 eines Motorrollers 10 dargestellt. Die Wirkweise der Zentrierungshilfe 220, der Buchse 300 sowie der Verriegelungsausformungen 310 ist vorhergehend bereits beschrieben.

Ebenfalls zu erkennen ist ein Teil der mechanischen Verriegelung 91, die eine Verriegelung der Batteriebaugruppe 70 mit dem Motorroller 10 ermöglicht. In den dargestellten Bügel der Verriegelung 91 kann ein Haken der Batteriebaugruppe 70 eingreifen, sodass eine mechanische Verriegelung ermöglicht wird. Durch Betätigen einer Schnur/einer Kette/eines Bandes/einer Schlaufe kann der Haken der Batteriebaugruppe 70 aus dem Bügel gelöst werden, sodass die mechanische Verriegelung gelöst werden kann.

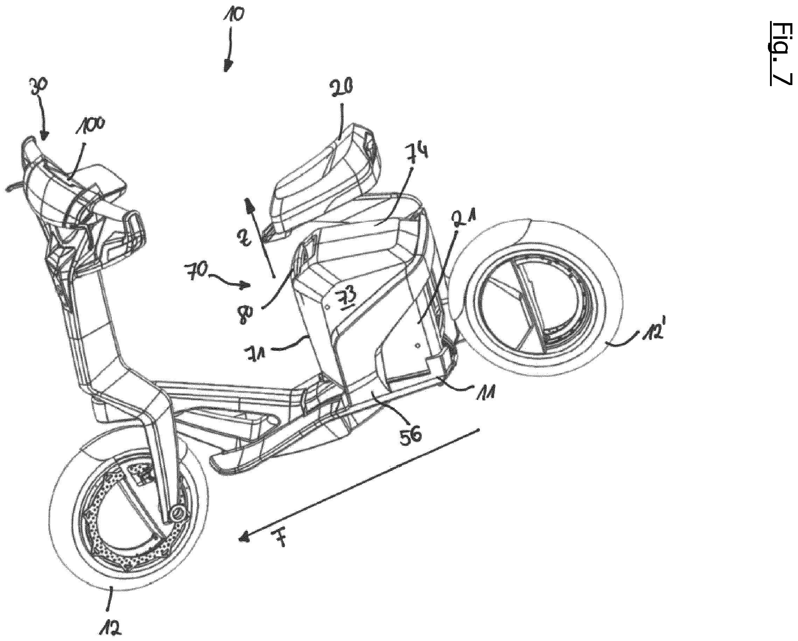

Fig. 7 zeigt die Gesamtansicht eines erfindungsgemäßen Rollers bzw. Motorrollers 10. Der Motorroller 10 hat eine Karosserie, an der ein Vorderrad 12 und ein Hinterrad 12' drehbeweglich befestigt sind. Des Weiteren umfasst die Karosserie eine Lenkeinrichtung 30, die ein Steuern des Motorrollers 10 ermöglicht. Am unteren Ende der Lenkeinrichtung 30 befindet sich das Vorderrad 12. Im rückwärtigen Teil, insbesondere am hinteren Rahmenteil 11 befindet sich ein Batteriegehäuse 21. Ebenfalls zu erkennen ist ein Sattel 20, der oberhalb des Batteriegehäuses 21 angeordnet bzw. ausgebildet ist.

Als Antrieb des dargestellten Motorrollers 10 dient ein Elektromotor, dessen Stromquelle innerhalb des Batteriegehäuses 21 angeordnet ist. Das Batteriegehäuse 21 ist innerhalb eines zwischen Sattel 20 und hinteren Rahmenteil 11 angeordneten Halterahmen 56 lösbar verankert. Das Batteriegehäuse 21 bzw. die Batteriebaugruppe 70 kann demnach aus dem Halterahmen 56 entfernt werden.

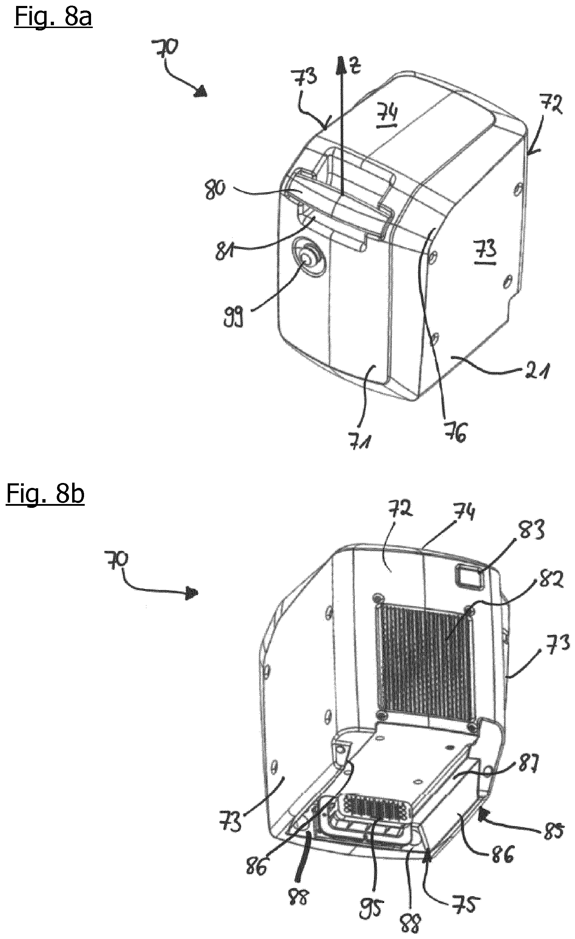

Die Lenkeinrichtung 30 ist im oberen Bereich T-förmig ausgebildet. Mittig in diesem oberen Bereich der Lenkeinrichtung 30 ist eine Anzeige 100 ausgebildet. In den Figuren 8a bis 8c ist die Batteriebaugruppe 70 dargestellt. Das Batteriegehäuse 21 umfasst eine Frontplatte 71', eine Rückplatte 72', zwei die Front- und Rückplatte 71' und 72' verbindende Seitenplatten 73', eine Deckelplatte 74' und einen Bodenabschnitt 75. Ebenfalls zu erkennen ist ein Betätigungselement 80, das in Form eines Griffes ausgebildet ist. Der Griff 80 ist im in den Motorroller 10 eingebauten Zustand quer zur Fahrtrichtung F angeordnet. Das Betätigungselement 80 ist insbesondere mit einer Feder vorgespannt.

Um ein Umgreifen des Betätigungselements 80 zu ermöglichen, weist das Batteriegehäuse 21 im Bereich des Betätigungselements 80, nämlich im Übergangsbereich 76 von der Frontplatte 71' zur Deckelplatte 74' eine Eingriffsausnehmung 81 auf. Diese Eingriffsausnehmung 81 ist derart ausgebildet, dass das Betätigungselement 80 mit der Hand vollständig umgreifbar ist.

Die Batteriebaugruppe 70 weist eine Passivkühlung in Form von einer Kühlrippenplatte 82 auf. Diese Kühlrippenplatte 82 ist auf der Rückplatte 72' des Batteriegehäuses 21 ausgebildet. Auf der Rückplatte 72' ist des Weiteren eine Netzbuchse 83 ausgebildet. Die Netzbuchse 83 ist in den dargestellten Ansichten abgedeckt, so dass die Netzbuchse 83 nicht verschmutzt wird. In diese Netzbuchse 83 ist ein Netzstecker einführbar, so dass die im Batteriegehäuse 21 befindliche Batterie 90 aufgeladen werden kann.

Das Batteriegehäuse 21 weist des Weiteren eine schlittenartige Führungsvorrichtung 85 auf. Die schlittenartige Führungsvorrichtung 85 ist im Bodenabschnitt 75 ausgebildet. Zu erkennen sind die seitlichen Schlittenbacken 86 und die Auflageflächen 87. Die schlittenartige Führungsvorrichtung 85 setzt sich somit aus zwei Schlittenbacken 86 und zwei Auflageflächen 87 zusammen. Es ist denkbar, dass die Auflageflächen 87 in Richtung der Frontplatte 71' nach oben gebogen ausgebildet sind.

Die dargestellte schlittenartige Führungsvorrichtung 85 kann auf eine schienenartige Führungsvorrichtung des Motorrollers 10 geschoben werden. Die schienenartige Führungsvorrichtung (nicht dargestellt) bildet somit das Gegenstück zur schlittenartigen Führungsvorrichtung 85. Sofern die Auflageflächen 87 der schlittenartigen Führungsvorrichtung 85 gebogen ausgebildet sind, sind die Auflageflächen der schienenartigen Führungsvorrichtung des Motorrollers 10 ebenfalls gebogen ausgebildet. Die frontplattenseitigen Flächen 88 des Bodenabschnitts 75 des Batteriegehäuses 21 dienen als Anschlagflächen. Die Flächen 88 regulieren den maximal möglichen Verschiebungsgrad des Batteriegehäuses 21 auf der schienenartigen Führungsvorrichtung des Motorrollers 10.

Die Batteriebaugruppe 70 weist des Weiteren einen kombinierten Strom-/Kommunikationsstecker 95 auf. Dieser kombinierte Strom-/Kommunikationsstecker 95 ist im Bodenabschnitt 75 des Batteriegehäuses 21 ausgebildet. In der dargestellten Ausführungsform befindet sich der kombinierte Strom-/Kommunikationsstecker 95 am frontplattenseitigen Ende bzw. an dem zur Frontplatte 71' weisenden Ende der schlittenartigen Führungsvorrichtung 85. Der kombinierte Strom-/Kommunikationsstecker 95 dient somit zum einen zur elektrischen Verbindung der Batteriebaugruppe 70 mit dem Motorroller 10. Zum anderen können Daten der Batteriebaugruppe 70 an den Motorroller 10 gesendet werden. Es ist möglich, dass Informationen bzw. Daten wie z.B. die Batterietemperatur und/oder der Ladezustand der Batterie 90 und/oder andere notwendige Daten hinsichtlich der Batterie 90 bzw. der Batteriebaugruppe 70 zur Anzeigeeinheit 100 gesendet werden.

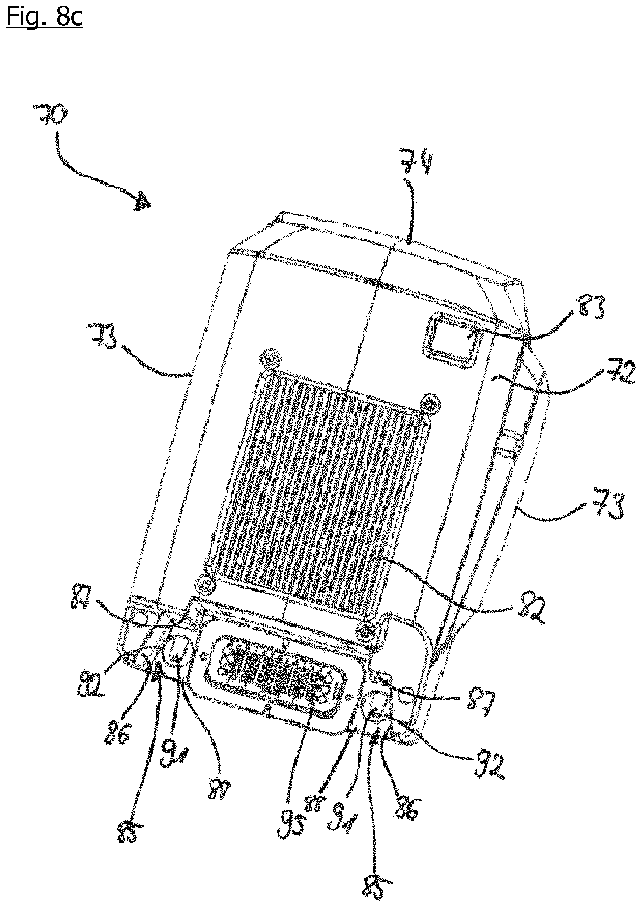

Sofern die Batteriebaugruppe 70 mit dem elektrischen Motorroller 10 verbunden ist und ausgewechselt bzw. aufgeladen werden soll, kann durch ein Betätigen des Betätigungselements 80 eine mechanische Verriegelung 91 (siehe Fig. 8c) gelöst werden. Zugleich wird der im Batteriegehäuse 21 ausgebildete Stromkreis unterbrochen. In der dargestellten Ausführungsform der Erfindung bilden zwei Verriegelungsbolzen die mechanische Verriegelung 91. Durch ein Hochziehen in Zugrichtung Z des Betätigungselements 80 werden auch die dargestellten Verriegelungsbolzen in Zugrichtung Z gezogen.

Zwei in den Aussparrungen 92 des Batteriegehäuses 21 (siehe hierzu Fig. 8c) befindliche Verriegelungsgegenstücke (nicht dargestellt) des Motorrollers 10 sind aufgrund des Hochziehens der Verriegelungsbolzen entriegelt. Nach diesem Hochziehen und Entriegeln der mechanischen Verriegelung 91 kann das Batteriegehäuse 21 mittels der schlittenartigen Führungsvorrichtung 85 auf der schienenartigen Führungsvorrichtung des Motorrollers 10 in Fahrtrichtung F verschoben bzw. geschoben werden. Das Batteriegehäuse 21 ist demnach in Fahrtrichtung F aus dem Halterahmen 56 lösbar.

Aufgrund des Betätigens bzw. Ziehens des Betätigungselements 80 wird des Weiteren ein im Inneren des Batteriegehäuses befindlicher Kontaktschalter betätigt, der den Stromkreis der Batteriebaugruppe 70 unterbricht. Nach dem vollständigen Entfernen des Batteriegehäuses 21 vom Motorroller 10 und dem Loslassen des Betätigungselements 80 kann der Kontaktschalter derart ausgebildet sein, dass der Stromkreis aufgrund des Loslassens des Betätigungselements 80 wieder geschlossen wird.

Aufgrund des Unterbrechens des Stromkreises ist die Strom-/Kommunikationsverbindung, die durch den Strom-/Kommunikationsstecker 95 der Batteriebaugruppe und einer Strom-/Kommunikationsbuchse des Motorrollers 10 gebildet wird, stromlos. Demnach fließt beim Verschieben des Batteriegehäuses 21 auf der schienenartigen Führungsvorrichtung und bei dem entsprechenden Loslösen des Strom-/Kommunikationssteckers 95 aus der Strom-/Kommunikationsbuchse kein Strom.

Beispielsweise weist die Batteriebaugruppe 70 einen Notaus-Knopf 99 auf, der z. B. auf der Frontplatte 71' ausgebildet ist.

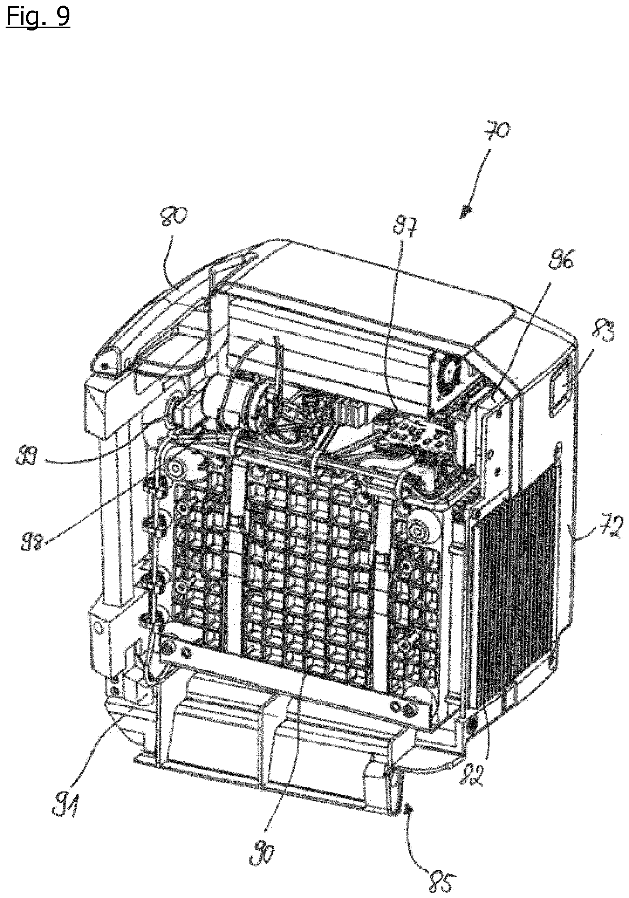

In der Fig. 9 werden in einer teiltransparenten Ansicht die im Batteriegehäuse 21 befindlichen Komponenten dargestellt. Die Batterie 90 ist als Akkusatz ausgebildet. Des Weiteren ist die Kühlrippenplatte 82 auf der Rückplatte 72' zu erkennen. Ebenfalls im Batteriegehäuse 21 befinden sich ein Ladegerät 96, eine Batterie-steuereinheit 97 sowie ein DC-DC-Konverter 98.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Motorroller
- 11: hinterer Rahmenteil
- 12: Vorderrad
- 12': Hinterrad
- 20: Sattel
- 21: Batteriegehäuse
- 30: Lenkeinrichtung
- 56: Halterahmen
- 70: Batteriebaugruppe
- 71: Frontabschnitt
- 71': Frontplatte
- 72: Rückabschnitt
- 72': Rückplatte
- 73: Seitenabschnitt
- 73': Seitenplatte
- 74: Deckelabschnitt
- 74': Deckelplatte
- 75: Bodenabschnitt
- 76: Übergangsbereich
- 80: Betätigungselement
- 81: Eingriffsausnehmung
- 82: Kühlrippenplatte
- 83: Netzbuchse
- 85: schlittenartige Führungsvorrichtung
- 86: Schlittenbacke
- 87: Auflagefläche
- 88: Anschlagfläche
- 89: Greifabschnitt
- 90: Batterie
- 91: mechanische Verriegelung
- 92: Aussparung Batteriegehäuse
- 95: kombinierter Strom-/Kommunikationsstecker
- 96: Ladegerät
- 97: Batterie-Steuereinheit
- 98: DC/DC-Konverter
- 99: Notaus-Knopf
- 100: Anzeigeeinheit
- 130: Rolle
- 135: Verlängerungsabschnitt
- 136: Führungsschiene
- 140: Verriegelungsplatte
- 141: Kante Verriegelungsplatte
- 150: Fach
- 151: Deckel
- 160: Verriegelungsausnehmung
- 180: Querschnittsprofil
- 185: Lautsprecher
- 190: Vertiefung
- 210: Führungsvorrichtung Motorroller
- 220: Zentrierungshilfe
- 221: Kante Zentrierungshilfe
- 230: Verriegelungsausnehmung
- 300: kombienierte Strom-/Kommunikationsbuchse
- 310: Verriegelungsausformung
- 315: Ausnehmung

- F: Fahrtrichtung
- Z: Zugrichtung

## Patentansprüche

1. Batteriebaugruppe (70), insbesondere für ein elektrisch antreibbares Motorfahrzeug, insbesondere für ein Motorrad, vorzugsweise für einen Motorroller (10), umfassend:
- mindestens eine, insbesondere wiederaufladbare, Batterie (90);
- mindestens eine lösbare mechanische Verriegelung (91) zur Verbindung des Batteriegehäuses (21) mit einer mit elektrischer Energie zu versorgenden Einheit, insbesondere zur Verbindung mit einem elektrischen Motorroller (10);
- mindestens einen im Batteriegehäuse (21) ausgebildeten Stromkreis; und
- mindestens ein Betätigungselement (80), das aus dem Batteriegehäuse (21) ausklappbar und/oder ausschwenkbar und/oder ausziehbar, insbesondere teleskopierbar, ausgebildet ist,
**dadurch gekennzeichnet, dass**
die mechanische Verriegelung (91) durch eine Schnur oder Kette oder ein Band oder Schlaufe, das/die im Batteriegehäuse (21) angeordnet ist, betätigbar ist.

2. Batteriebaugruppe (70) nach Anspruch 1,
**dadurch gekennzeichnet, dass**
das Batteriegehäuse (21) einen Frontabschnitt (71), einen Rückabschnitt (72), zwei die Front- und Rückabschnitte verbindende Seitenabschnitte (73), einen Deckelabschnitt (74) und einen Bodenabschnitt (75) umfasst, wobei das Batteriegehäuse (21) eine, insbesondere schlittenartige, Führungsvorrichtung (85) aufweist, die auf eine, insbesondere schienenartige, Führungsvorrichtung (210) der zu versorgenden Einheit geschoben oder schiebbar ist.

3. Batteriebaugruppe (70) nach Anspruch 2,
**dadurch gekennzeichnet, dass**
die schlittenartige Führungsvorrichtung (85) im Bodenabschnitt (75) ausgebildet ist.

4. Batteriebaugruppe (70) nach einem der vorhergehenden Ansprüche,
**dadurch gekennzeichnet, dass**
das Batteriegehäuse (21) im Bereich des Betätigungselements (80) eine Eingriffsausnehmung (81) aufweist, die derart ausgebildet ist, dass das Betätigungselement (80) mit einer Hand umgreifbar ist.

5. Batteriebaugruppe (70) nach einem der vorhergehenden Ansprüche,
**gekennzeichnet durch**
eine Passivkühlung, die vorzugsweise als eine Anordnung von Kühlrippen oder als Lufteinlassöffnung ausgebildet ist, und/oder eine Aktivkühlung, die vorzugsweise als Lüftungsrad ausgebildet ist.

6. Batteriebaugruppe (70) nach einem der vorhergehenden Ansprüche,
**gekennzeichnet durch**
einen kombinierten Strom-/Kommunikationsstecker (95).

7. Batteriebaugruppe (70) nach einem der vorhergehenden Ansprüche,
**gekennzeichnet durch**
mindestens eine Netzbuchse (83) zur Aufladung der mindestens einen Batterie (90) und/oder durch mindestens eine Bluetooth-Schnittstelle und/oder durch mindestens einen USB-Buchse.

8. Batteriebaugruppe (70) nach einem der vorhergehenden Ansprüche, insbesondere nach einem der Ansprüche 2 bis 7,
**dadurch gekennzeichnet, dass**
im Batteriegehäuse (21) rückabschnittsseitig ein, insbesondere verschließbares und/oder verriegelbares, Fach ausgebildet ist.

9. Batteriebaugruppe (70) nach einem der vorhergehenden Ansprüche, insbesondere nach einem der Ansprüche 2 bis 8,
**dadurch gekennzeichnet, dass**
auf dem Batteriegehäuse (21), insbesondere deckelabschnittsseitig, ein Sattel (20) ausgebildet ist.

10. Batteriebaugruppe (70) nach Anspruch 9,
**dadurch gekennzeichnet, dass**
der Sattel (20) ein V-förmiges und/oder U-förmiges Querschnittsprofil (180) aufweist.

11. Batteriebaugruppe (70) nach einem der vorhergehenden Ansprüche,
**gekennzeichnet durch**
mindestens einen, im Batteriegehäuse (21) eingebauten Lautsprecher (185), der vorzugsweise ein Resonanzlautsprecher ist, wobei ein Abschnitt des Batteriegehäuses (21) als Resonanzfläche ausgebildet ist.

12. Elektrisch antreibbares Motorrad, vorzugsweise Motorroller (10), umfassend mindestens eine auswechselbare Batteriebaugruppe (70) nach einem der Ansprüche 1 bis 11.

13. Elektrisch antreibbares Motorrad, insbesondere Motorroller (10), nach Anspruch 12,
**dadurch gekennzeichnet, dass**
die Batteriebaugruppe (70) an einem hinteren Rahmenteil (11) des Motorrollers (10) lösbar befestigt ist.

14. Elektrisch antreibbares Motorrad, insbesondere Motorroller (10), nach Anspruch 12 oder 13,
**gekennzeichnet durch**
eine, insbesondere schienenartig ausgebildete, Führungsvorrichtung (210), wobei ein/das Batteriegehäuse (21) nach Lösen einer/der mechanischen Verriegelung (91) der Batteriebaugruppe (70) mit Hilfe einer/der, vorzugsweise schlittenartigen, Führungsvorrichtung (85) der Batteriebaugruppe (70) von der Führungsvorrichtung (210) des Motorrads, insbesondere des Motorrollers (10), entgegen der Fahrtrichtung (F) schiebbar ist.

15. Elektrisch antreibbares Motorrad, insbesondere Motorroller (10), nach Anspruch 14,
**gekennzeichnet durch**
ein mit der mechanischen Verriegelung (91) zusammenwirkend ausgebildetes Verriegelungsgegenstück, insbesondere einen Verriegelungsbügel.

## Claims

1. A battery module (70), in particular for an electrically drivable motor vehicle, in particular for a motor cycle, preferably for a motor scooter (10), comprising:
- at least one, in particular rechargeable battery (90);
- at least one releasable mechanical lock (91) for connecting the battery housing (21) to a unit to be supplied with electrical energy, in particular for connecting to an electrical motor scooter (10);
- at least one electric circuit formed in the battery housing (21); and
- at least one actuating member (80) formed to be able to be folded out and/or pivoted out and/or pulled out, in particular telescoped out from the battery housing (21),
**characterized in that**
the mechanical lock (91) may be operated by a string or chain or a strip or loop arranged within the battery housing (21).

2. The battery module (70) according to claim 1,
**characterized in that**
the battery housing (21) comprises a front portion (71), a rear portion (72), two side portions (73) interconnecting the front and rear portions, a cover portion (74) and a bottom portion (75), wherein the battery housing (21) includes an in particular carriage-like guiding device (85), which is slid or slidable onto an in particular rail-like guiding device (210) of the unit to be supplied.

3. The battery module (70) according to claim 2,
**characterized in that**
the carriage-like guiding device (85) is formed in the bottom portion (75).

4. The battery module (70) according to any one of the preceding claims,
**characterized in that**
in the area of the actuating member (80), the battery housing (21) includes an engagement recess (81) which is formed such that the actuating member (80) may be grasped around by one hand.

5. The battery module (70) according to any one of the preceding claims,
**characterized by**
a passive cooling preferably formed as an arrangement of cooling fins or as an air entry opening and/or an active cooling preferably formed as a ventilation wheel.

6. The battery module (70) according to any one of the preceding claims,
**characterized by**
a combined power/communication connector (95).

7. The battery module (70) according to any one of the preceding claims,
**characterized by**
at least one mains socket (83) for charging the at least one battery (90) and/or by at least one Bluetooth interface and/or by at least one USB socket.

8. The battery module (70) according to any one of the preceding claims, in particular according to any one of claims 2 to 7,
**characterized in that**
on the rear portion side, at least one in particular sealable and/or lockable compartment is formed in the battery housing (21).

9. The battery module (70) according to any one of the preceding claims, in particular according to any one of claims 2 to 8,
**characterized in that**
on top of the battery housing (21), in particular on the side of the cover portion, a saddle (20) is formed.

10. The battery module (70) according to claim 9,
**characterized in that**
the saddle (20) has a V-shaped and/or U-shaped cross-sectional profile (180).

11. The battery module (70) according to any one of the preceding claims,
**characterized by**
at least one loudspeaker (185) installed in the battery housing (21) and preferably being a resonance loudspeaker, wherein a portion of the battery housing (21) is formed as a resonance surface.

12. An electrically drivable motor cycle, in particular a motor scooter (10), comprising at least one exchangeable battery module (70) according to any one of claims 1 to 11.

13. The electrically drivable motor cycle, in particular a motor scooter (10), according to claim 12,
**characterized in that**
the battery module (70) is releasably attached to a rear frame part (11) of the motor scooter (10).

14. The electrically drivable motor cycle, in particular a motor scooter (10), according to claim 12 or 13,
**characterized by**
a guiding device (210) of an in particular rail-like design, wherein a/the battery housing (21) may be slid by the guiding device (210) of the motor cycle, in particular the motor scooter (10), against the travel direction (F), after releasing a/the mechanical lock (91) of the battery module (70) by means of a/the preferably carriage-like guiding device (85) of the battery module (70).

15. The electrically drivable motor cycle, in particular a motor scooter (10), according to claim 14,
**characterized by**
a locking counterpart, in particular a locking bracket, formed to be cooperating with the mechanical lock (91).

## Revendications

1. Module de batterie (70), en particulier pour un véhicule motorisé entraînable électriquement, en particulier pour une motocyclette, de préférence pour un scooter (10), comprenant :
- au moins une batterie (90), en particulier rechargeable ;
- au moins un verrouillage (91) mécanique détachable pour la liaison du carter de batterie (21) à une unité à alimenter en énergie électrique, en particulier pour la liaison à un scooter (10) électrique ;
- au moins un circuit électrique constitué dans le carter de batterie (21) ; et
- au moins un élément d'actionnement (80) qui est constitué de manière dépliable et/ou pivotable et/ou escamotable hors du carter de batterie (21), en particulier télescopique,
**caractérisé en ce que**
le verrouillage (91) mécanique est actionnable par un cordon ou une chaîne ou un ruban ou une sangle qui est disposé/e dans le carter de batterie (21).

2. Module de batterie (70) selon la revendication 1,
**caractérisé en ce que**
le module de batterie (21) comprend une section avant (71), une section arrière (72), deux sections latérales (73) reliant les sections avant et arrière, une section couvercle (74) et une section fond (75), sachant que le carter de batterie (21) présente un dispositif de guidage (85), en particulier de type fente, qui est poussé ou apte à être poussé sur un dispositif de guidage (210), en particulier de type fente, de l'unité à alimenter.

3. Module de batterie (70) selon la revendication 2,
**caractérisé en ce que**
le dispositif de guidage (85) de type fente est constitué dans la section fond (75).

4. Module de batterie (70) selon l'une des revendications précédentes,
**caractérisé en ce que**
le carter de batterie (21) présente, dans la zone de l'élément d'actionnement (80), un évidement de mise en prise (81) qui est constitué de telle façon que l'élément d'actionnement (80) soit préhensible en l'enveloppant d'une main.

5. Module de batterie (70) selon l'une des revendications précédentes,
**caractérisé par**
un refroidissement passif, qui est de préférence constitué comme agencement de nervures de refroidissement ou come orifice d'admission d'air, et/ou un refroidissement actif, qui est constitué de préférence comme roue de ventilation.

6. Module de batterie (70) selon l'une des revendications précédentes,
**caractérisé par**
une fiche de courant/communication (95) combinée.

7. Module de batterie (70) selon l'une des revendications précédentes,
**caractérisé par**
au moins une prise de secteur (83) pour le chargement de l'au moins une batterie (90) et/ou par au moins une interface Bluetooth et/ou par au moins une prise USB.

8. Module de batterie (70) selon l'une des revendications précédentes, en particulier selon l'une des revendications 2 à 7,
**caractérisé en ce que**
un compartiment, en particulier obturable et/ou verrouillable, est constitué côté section arrière dans le carter de batterie (21).

9. Module de batterie (70) selon l'une des revendications précédentes, en particulier selon l'une des revendications 2 à 8,
**caractérisé en ce que**
une selle (20) est constituée sur le carter de batterie (21), en particulier côté section couvercle.

10. Module de batterie (70) selon la revendication 9,
**caractérisé en ce que**
la selle (20) présente un profil de section transversale (180) en forme de V et/ou en forme de U.

11. Module de batterie (70) selon l'une des revendications précédentes,
**caractérisé par**
au moins un haut-parleur (185) logé dans le carter de batterie (21), qui est de préférence un haut-parleur à résonance, sachant qu'une section du carter de batterie (21) est constituée comme face de résonance.

12. Motocyclette entraînable électriquement, de préférence scooter (10), comprenant au moins un module de batterie (70) échangeable selon l'une des revendications 1 à 11.

13. Motocyclette entraînable électriquement, en particulier scooter (10), selon la revendication 12,
**caractérisé en ce que**
le module de batterie (70) est fixé de manière détachable à une partie de châssis arrière (11) du scooter (10).

14. Motocyclette entraînable électriquement, en particulier scooter (10), selon la revendication 12 ou 13,
**caractérisé par**
un dispositif de guidage (210), en particulier constitué de type fente, sachant qu'un/le carter de batterie (21) peut être poussé du dispositif de guidage (210) de la motocyclette, en particulier du scooter (10), à l'encontre du sens de marche (F), après détachement d'un/du verrouillage (91) mécanique du module de batterie (70) à l'aide d'un/du dispositif de guidage (85), de préférence de type fente, du module de batterie (70).

15. Motocyclette entraînable électriquement, en particulier scooter (10), selon la revendication 14,
**caractérisé par**
une contrepartie de verrouillage, en particulier un étrier de verrouillage, constitué/e de manière à interagir avec le verrouillage (91) mécanique.
